# EUROPEAN PATENT SPECIFICATION

(11) **EP 0 361 631 B1**
(45) Date of publication and mention of the grant of the patent: **26.01.1994**
(21) Application number: 89250042.2
(22) Date of filing: 21.09.1989
(51) Int. Cl.: B62D 43/02

(54) **A spare tire cover**
Reserveradabdeckung
Couverture de roue de secours

(30) Priority: 28.09.1988 JP 243517/88
(43) Date of publication of application: 04.04.1990
(73) Proprietor: SUZUKI MOTOR CORPORATION, Hamamatsu-shi, Shizuoka-ken (JP)
(72) Inventor: Kamo, Mitsuhiro, Hamamatsu-shi Shizuoka Pref. (JP)
(74) Representative: Meissner, Peter E., Dipl.-Ing.

(56) References cited:
- DE-U- 8 624 009
- FR-A- 1 444 715
- US-A- 1 629 777
- US-A- 1 897 888
- US-A- 2 440 805

## Description

### FIELD OF THE INVENTION AND RELATED ART STATEMENT:

The present invention relates to a cover for a spare tire to be carried outside a vehicle body of a carriage, particularly a four-wheeled automobile and the like.

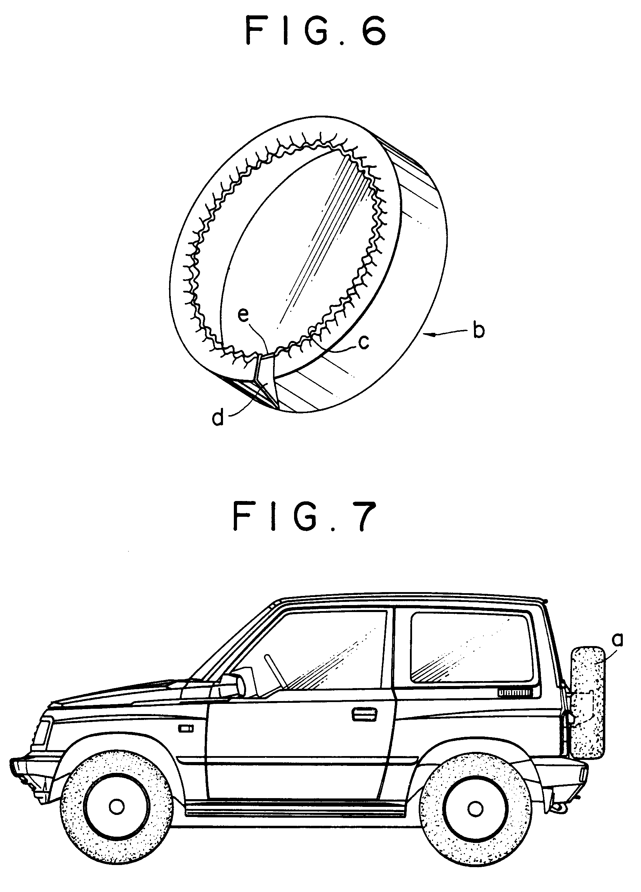

In an off-road car and the like having a spare tire carried at the rear part of the vehicle body, a fabric tire cover b is usually used to protect the spare tire from damage etc., FIG. 6 is a perspective view illustrating one embodiment, wherein the cover b has an opening c and a cut-out portion d respectively defined in its reverse surface (vehicle body side) for facilitating its attachment. The opening c has a rubber thread e arranged around the circumference of its edge portion.

The opening c is enlarged to cover a spare tire a and the spare tire is accommodated inside the cover with the cut-out portion d facing downwardly, whereby wrapping the spare tire a with the tire cover b.

### OBJECT AND SUMMARY OF THE INVENTION:

The tire cover b of the above construction suffered from a drawback that a rain water could enter into the cover to wash away contaminants off the spare tire and consequently a resultant fouled water flowed out of the cut-out portion d to contaminate the vehicle body.

Since the fabric of the tire cover b is subject to a modification in properties and a contraction with age, it becomes progressively difficult to attach the cover over the tire a, frequently resulting in the break of the tire cover b.

Moreover, where the tire cover b bears a capital and other markings etc., on its surface, the tire cover b may be impaired aesthetically when attached to the spare tire b in a twisted form. Consequently, adjusting the position of the tire cover with the cover secured around the tire was almost impossible, since the tire cover b is excessively tightly secured around the outer circumference of the spare tire under the tension from the rubber thread e.

US-A-16 29 777 discloses a spare tire cover, which consists of a front wall, a rear wall and a circumferential wall connecting said front and rear walls. The front wall and the circumferential wall consist of separate upper and lower portions. The upper portion can be opended and closes. However, said portion is not freely bendable and therefore, it becomes a hindrance. Further, the upper portion of said cover is caused to engage the lower portion by means of a special metal tool and special members. Therefore, such an operation is not so simple.

The present invention has been made with the above problems in the prior art as a background, and its object is to provide a spare tire cover which can eliminate the above drawbacks by allowing a upper half of the tire cover to be tilted and opened in the direction of user.

To achieve the above object, the present invention provides a spare tire cover, said tire cover being secured in place outside a vehicle body, wherein said cover is made of a shape-retaining material formed into a substantially cylindrical body consisting of a front wall, a rear wall and a circumferential wall connecting said front and rear walls where said front wall and said circumferential wall consist of separate upper an lower portions,
characterized in that
said rear wall is structured to be freely bendable along a diameter axis and whereby in the closed position of the tire cover overlapping portions are provided between the two separate front wall portions and circumferential portions respectively, said overlapping portions being provided with detachable tape.

### BRIEF DESCRIPTION OF THE DRAWINGS:

FIG. 1 through FIG. 5 are views illustrating one embodiment of the spare tire cover according to the principle of the present invention, wherein;
FIG. 1 is a perspective view of the cover when it is looked from a lower direction;
FIG. 2 through FIG. 4 are perspective views illustrating the sequence of attaching the cover around the spare tire;
FIG. 5 is a cross-sectional views taken along a line C-C in FIG. 4;
FIG. 6 is a perspective view illustrating a prior art tire cover which corresponds with that of FIG. 1; and
FIG. 7 is a side elevation of an off-road car.

### DETAILED DESCRIPTION OF PREFERRED EMBODIMENTS:

The present invention will be described hereinbelow in details for a preferred embodiment, with reference to accompanying drawings.

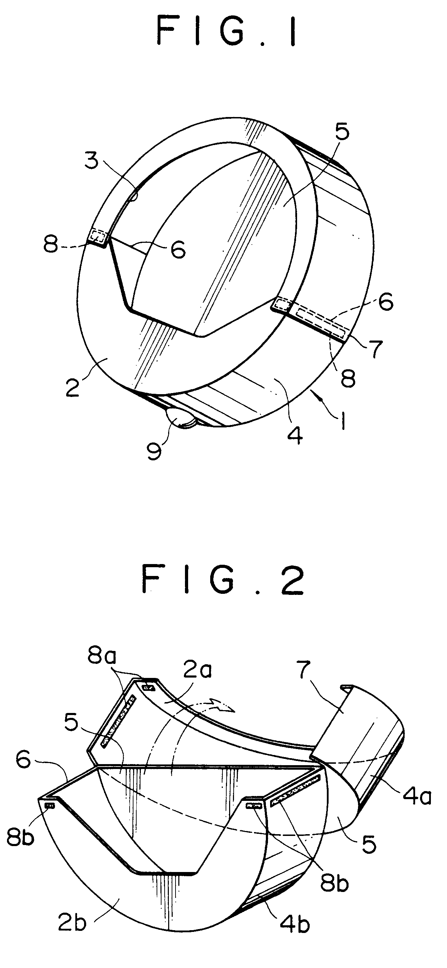

In FIG. 1 through FIG. 5, a numeral 1 represents a tire cover of the present invention.

The cover 1 is formed from a material of shape-retaining characteristics (or any other materials may be used) substantially in a cylindrical configuration, and comprises a bottom wall 2 that faces toward a vehicle body side and has an opening 3 defined therethrough, a circumferencial wall 4 and a upper wall 5. The bottom wall 2 and the circumferential wall 4 are split substantially into equal halves along a parting plane 6, which arrangement allows the upper wall 5 to be folded in the direction of user along the parting plane 6 (see FIG. 2). In other words, the bottom wall 2 is split into a upper bottom wall 2a and a lower bottom wall 2b, whereas the circumferential wall 4 is split into a upper circumferential wall 4a and a lower circumferential wall 4b respectively. The upper bottom wall 2a and the upper circumferential wall 4a are provided with an overlapping portion which extends downwardly from the parting plane 6. On the other hand, the lower bottom wall 2b and the lower circumferential wall 4b are provided horizontally along its upper surface edge portion with an engaging portion, i.e., a tape 8b with freely detachable characteristics. A similar tape 8a applied over the undersurface of the overlapping portion 7 is made to adhere to the tape 8b when the upper half of the cover is caused to stand uprightly. That is, the tape 8 comprises a pair of tapes, one tape having, for example, a multiplicity of small hooks embedded thereover, and other tape having a multiplicity of small rings embedded thereover which are brought into an off engagement with above hooks, either of pair of tapes 8b being adhered to the undersurface of the overlapping portion 7 and other of the pair of tapes 8b being adhered to the surface of the upper edge of the lower bottom wall 2b and the circumferential wall 4b adjacent to the parting plane 6. These tapes functions to engage with and disengage from an object (i.e., having freely detachable function) when two tapes are pressed and then peeled off each other. Thus, such tape is a so-called magic fastener. Meanwhile, the tape 8 may be replaced with an alternative type engaging member or an engaging structure.

A numeral 9 represents a drain hole defined through the lower end of the tire cover 1 adjacent to its upper wall 5 for draining out a rain water ingressed into the tire cover 1 through the hole 9.

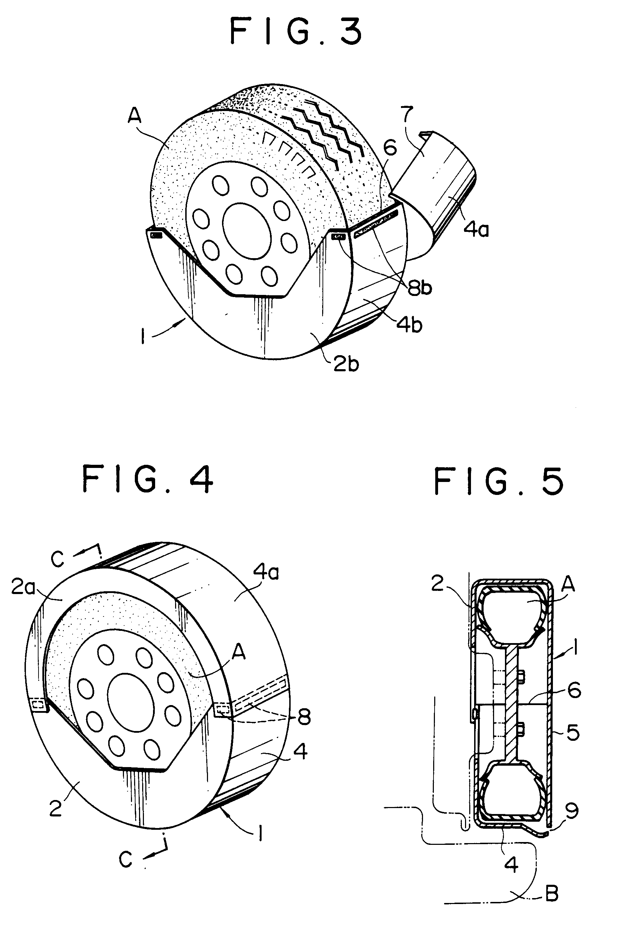

The present invention is constituted as above, and the spare tire may be attached in a following manner. The tape 8, which applied between the overlapping portion 7 and the upper edge portions of the lower bottom wall 2b and of the lower circumferential wall 4b is first peeled off, and then the upper half of the tire cover 1 is folded for expansion in the direction of user as shown in FIG. 2. Subsequently, the tire cover 1 is raised upwardly by a user grasping with hands opposite ends of the upper wall 5 of this folded portion, and the spare tire A which has been attached at the rear portion of the vehicle body is accommodated in the lower half section of the tire cover 1. Lastly, the upper half section of the tire cover is erected uprightly and applied over the spare tire A as shown in FIG. 4 and then the overlapping portion 7 is brought into engagement with the above-described upper edge portion through the tape and thereby completing a cover attaching procedure.

A rain water ingressed into the interior of the tire cover 1 is drained out through a drain hole 9 defined through the lower end of the tire cover, whereby preventing the rear bumper B from being contaminated with a foulded water

According to the present invention, the spare tire cover may be fixed in position using a simple procedure, i.e., the upper half section of the tire cover is folded in the direction of user and then the spare tire is accommodated in its lower half section, and the upper half section is erected uprightly and secured to the lower half section, and consequently no obstacle will be present for attaching the tire even when the tire cover is deformed or contracted.

Moreover, the tire cover is not attached tightly around the circumferential surface of the spare tire, as is frequently observed in the case of traditional tire cover utilizing a rubber thread to lash an opening in the rear surface, and consequently the adjustment of the spare tire for its position can be made easily even when the tire has been put into position in a twisted state.

Furthermore, there is no need of forming a cut-out portion in the lower edge portion as in the prior art tire cover, and an additional merit is derived that a foul water does not flow out of this cut-out portion to contaminate the vehicle body.

## Claims

1. A cover (1) for a spare tire attached to the outside of a vehicle body comprising;
a cover (1) made of a shape-retaining material formed into a substantially cylindrical body consisting of
a front wall (2), a rear wall (5) and a circumferential wall (4) connecting said front and rear walls where said front wall (2) and said circumferential wall (4) consist of separate upper an lower portions;
characterised in that
said rear wall (5) is structured to be freely bendable along a diameter axis and whereby in the closed position of the tire cover (1) overlapping portions (7) are provided between the two separate front wall portions and circumferential portions respectively, said overlapping portions (7) being provided with detachable tape (8).

2. A cover for a spare tire according to claim 1 wherein a drain hole is provided at a portion adjacent to the upper wall of lower portion of said cylindrical cover.

## Patentansprüche

1. Eine Abdeckung (1) für einen Reservereifen, der an der Außenseite einer Fahrzeugkarosserie befestigt ist, bestehend aus:
einer Abdeckung (1) aus einem formbeständigen Material in einer im wesentlichen zylindrischen Form aus
einer Vorderwand (2), einer Rückwand (5) und einer umlaufenden Wand (4), welche die besagten Vorder- und Rückwände verbindet, wobei die besagte Vorderwand (2) und die besagte umlaufende Wand (4) aus getrennten Ober- und Unterteilen bestehen,
dadurch gekennzeichnet, daß
die besagte Rückwand (5) so strukturiert ist, daß sie entlang einer dem Durchmesser der Abdeckung (1) entsprechenden Achse frei abklappen läßt, wobei sich im geschlossenen Zustand der Reifenabdeckung (1) jeweils überlappende Abschnitte (7) zwischen den zwei voneinander getrennten Teilen der Vorderwand und den beiden Teilen der umlaufenden Wand ergeben und diese überlappenden Abschnitte (7) mit Verschlußband (8) versehen sind.

2. Eine Abdeckung für einen Reservereifen gemäß Anspruch 1, die eine Ablauföffnung in einem Abschnitt aufweist, der unmittelbar neben der oberen Wand der unteren Hälfte der besagten zylindrischen Abdeckung liegt.

## Revendications

1. Couvercle (1) pour roue de secours fixée à l'extérieur de la carrosserie d'un véhicule, comprenant :
un couvercle (1) réalisé en une matière façonnée, formée en un corps sensiblement cylindrique comprenant une paroi frontale (2), une paroi arrière (5) et une paroi périphérique (4) reliant lesdites parois frontale et arrière, ladite paroi frontale (2) et ladite paroi périphérique (4) comprenant des parties supérieure et inférieure séparées,
caractérisé en ce que ladite paroi arrière (5) est structurée pour être librement déformable le long d'un axe diamétral et, dans la position fermée du couvercle de roue (1), des parties (7) se chevauchant sont prévues entre les deux parties de paroi frontale séparées et les parties périphériques respectivement, lesdites parties (7) se chevauchant étant munies de bandes détachables.

2. Couvercle pour roue de secours selon la revendication 1, dans lequel un trou de drainage est prévu à une partie adjacente à la paroi supérieure de la partie inférieure dudit couvercle cylindrique.
